Europäisches Patentamt

European Patent Office

Office européen des brevets

(11) Publication number: **0 422 837 A1**

(12) **EUROPEAN PATENT APPLICATION**

(21) Application number: **90310891.8**

(22) Date of filing: **04.10.90**

(51) Int. Cl.⁵: **C08F 279/02**, //(C08F279/02, 212:02)

(30) Priority: **09.10.89 GB 8922677**

(43) Date of publication of application:
**17.04.91 Bulletin 91/16**

(84) Designated Contracting States:
**BE DE FR GB IT NL SE**

(71) Applicant: **THE DOW CHEMICAL COMPANY**
**2030 Dow Center Abbott Road**
**Midland, MI 48640(US)**

(72) Inventor: **Demirors, Mehmet**
**Langs de Kreek 25**
**NL-4535 AA Terneuzen(NL)**

(74) Representative: **Raynor, John**
**W.H. Beck, Greener & Co 7 Stone Buildings**
**Lincoln's Inn**
**London WC2A 3SZ(GB)**

(54) **Rubber-reinforced polymer composition incorporating grafting agent.**

(57) In a mass polymerization process, substantial improvements, in gloss and/or gloss sensitivity can be achieved by incorporating in the polymerization mixture after the point of phase inversion a specific grafting agent of the formula:

$$R^1R^2C = Cr^5 - Cr^6 - Cr^3R^4$$

wherein $R^1$, $R^2$, $R^3$, and $R^4$ are each independently H or $Cz1$ to $Cz15$ alkyl, preferably H,

$R^5$ and $R^6$ are each independently H or a group of the formula:

$$-(CR^7R^8)_n - CR^9 - CR^{10}R^{11}$$

wherein $R^7$ is H, Cl, Br or I, preferably H,

$R^8$ is H, or a group of the formula $-CR^9 - CR^{10}R^{11}$ preferably H

Each $R^9$ independently is H or methyl

each $R^{10}$ and each $R^{11}$ independently is $Cz1$ to $Cz4$ alkyl preferably methyl

and n is 1 or 2

provided that $R^5$ and $R^6$ are not both hydrogen and preferably $R^5$ is hydrogen. In a preferred embodiment the grafting is myrcene.

EP 0 422 837 A1

## RUBBER-REINFORCED POLYMER COMPOSITION INCORPORATING GRAFTING AGENT

This invention relates to rubber-reinforced plastics compositions, and in particular to compositions of the high impact polystyrene (HIPS) type or butadiene rubber-containing styrene-acrylonitrile (ABS) type. Such compositions are widely used as molding compositions in a great variety of applications.

As is well known, the size of the rubber reinforcing particles used in such compositions can influence greatly the properties, and in particular the impact strength, of the composition. In general, it is found that the presence of larger rubber particles results in increased impact strength.

The presence of relatively large rubber particles can however have a deleterious effect of the final product, and particularly, on its gloss and gloss sensitivity (i.e. the sensitivity of the gloss obtained to variation in molding temperature in different regions of the mold).

A number of techniques are available for the production of rubber-reinforced polymer compositions, the two main commercial ones being emulsion polymerization, and so-called mass polymerization. In the mass polymerization process, the rubber which is to act as the reinforcement in the polymer product is dissolved in a monomer mixture, typically comprising one or more monovinylidene monomers, and optionally one or more other monomers copolymerizable therewith and a diluent. The monomers are then polymerized to produce a polymer matrix. The initial reaction mixture is essentially a solution of rubber in the monomer and optional diluent. As the reaction begins, polymer that is formed is either graft polymerized to the rubber molecules or forms a discontinuous phase as a solution of polymer in monomer/diluent dispersed in the continuous phase of rubber/monomer/diluent solution.

At a point in the polymerization process, the rubber-containing phase separates out as a discontinuous phase of rubber particles, dispersed within the growing polymer matrix. This point is known as "phase inversion".

The present invention is based upon the discovery that in a mass polymerization process, substantial improvements in gloss and/or gloss sensitivity can be achieved by incorporating in the polymerization mixture after the point of phase inversion a specific grafting agent.

The grafting agent used in accordance with the invention is a compound of the formula:-

$$R^1R^2C = CR^5-CR^6 = CR^3R^4$$

wherein $R^1, R^2, R^3$ and $R^4$ are each independently H or $C_1$ to $C_{15}$ alkyl, preferably H and
$R^5$ and $R^6$ are each independently H or a group of the formula:

$$-(CR^7R^8)_n-CR^9 = CR^{10}R^{11}$$

wherein $R^7$ is H, Cl, Br or I, preferably H
$R^8$ is H, or a group of the formula -
$-CR^9 = CR^{10}R^{11}$, preferably H
each $R^9$ independently is H or methyl,
each $R^{10}$ and each $R^{11}$ independently is $C_1$ to $C_4$ alkyl, preferably methyl
and n is 1 or 2,
provided that $R^5$ and $R^6$ are not both hydrogen and preferably $R^5$ is hydrogen.

In a preferred embodiment, the grafting agent is myrcene (i.e. the $C^{10}H^{16}$ compound of the formula:-
$(CH_3)_2C = CHCH_2CH_2C( = CH_2)CH = CH_2$

The use of myrcene is not unknown in the production of rubber-reinforced polymers. For example, U.S. Patent No. 4,221,878 discloses the use of myrcene as an acrylonitrile scavenger in an acrylonitrile polymer, and U.S. Patent No. 4,221,905 discloses the use of myrcene as a styrene scavenger in styrenic polymers. In these references, however, the myrcene is added not during the polymerization process, but is blended with the polymer during post-processing. It does not therefore function as a grafting agent.

U.S. Patent No. 4,346,199 discloses the use of myrcene in an emulsion polymerization process, in which the myrcene is fed to an emulsion mixture with the monomers, and polymerized. It should be noted incidentally that contrary to what is claimed in U.S. Patent No. 4,346,199, there is normally no reaction between rubber and myrcene under these conditions. In any event, if a mass polymerization process is carried out in a manner similar to the emulsion process disclosed in U.S. Patent No. 4,346,199, (i.e. if myrcene is added at the outset of polymerization) the total destruction of the rubber morphology results, so that the gloss and gloss sensitivity of the product obtained is worse than in a material containing no myrcene.

This is because myrcene reacts very quickly with the polymerizing monomers in the mass process and is consumed. Furthermore, it has been found that myrcene reduces the molecular weight of the polymers formed, by acting as a chain transfer agent, when added at the outset of polymerization, and thus has a detrimental effect on the physical properties of the end product. U.S. Patent No. 4,346,199 would not therefore be seen as a recommendation to utilize myrcene as a grafting agent, in a mass polymerization process.

In accordance with a first aspect of the invention, there is provided a method for the production of a rubber-reinforced polymer which method comprises polymerizing a monovinylidene monomer, for example styrene or alpha methyl styrene, optionally one or more other monomers copolymerizable therewith, for example acrylonitrile or a alkyl acrylate or alkyl methacrylate, the mixture comprising a rubber, for example a polyisoprene or polybutadiene, dissolved in the said monomer or monomer mixture, continuing the said polymerization at least until the occurrence of phase inversion, thereafter adding to the polymerization mixture a grafting agent of the formula:-

$R^1R^2C = CR^5\text{-}CR^6 = CR^3R^4$

wherein $R^1$, $R^2$, $R^3$ and $R^4$ are each independently hydrogen or
$C_1$ to $C_{15}$ alkyl, preferably hydrogen and $R^5$ and $R^6$ are each independently hydrogen or a group of the formula:-

$-(CR^7R^8)_n\text{-}CR^9 = CR^{10}R^{11}$

wherein $R^7$ is H, Cl, Br or I, preferably H
$R^8$ is H, or a group of the formula
$-CR^9 = CR^{10}R^{11}$, preferably H
each $R^9$ independently is H or methyl,
each $R^{10}$ and each $R^{11}$ independently is $C_1$ to $C_4$ alkyl, preferably methyl
and n is 1 or 2,

provided that $R^5$ and $R^6$ are not both hydrogen and preferably $R^5$ is hydrogen, and continuing the polymerization in the presence of the grafting agent to produce a rubber-reinforced polymer composition.

The preferred grafting agent is myrcene.

It is well known that the use of so-called bimodal rubber particle distributions can give substantial benefits in terms of the balance between molding properties and impact strength. The method of the invention is particularly suitable for improving the gloss and gloss sensitivity of compositions having bimodal or trimodal rubber particle size distributions.

The grafting agent used in accordance with the present invention reacts with the double carbon bonds of the rubber backbone, and is effective to improve the gloss and/or gloss sensitivity of the product. As noted above however, it is important the grafting agent is added after phase inversion, and before completion of polymerization. The point at which the grafting agent is added must be after the point at which rubber particles are formed and stabilized, since adding the grafting agent before this point will result in destruction of the rubber morphology. Although there is no particular restriction on the time period between phase inversion, and the point at which the grafting agent is added, the effectiveness of the grafting agent is reduced as the time between phase inversion and its addition is increased. Addition subsequent to the polymerization step, such as in U.S. Patents Nos. 4,221,878 and 4,221,905, will obviously not achieve the desired graft polymerization enhancement.

It is found that the product of the present invention is very different in its properties from previous rubber-reinforced compositions which have been prepared using myrcene, for example, those prepared in U.S. Patent 4,346,199. Although it is not intended to be bound by any particular theory of operation, it is believed that, in the compositions produced according to the present invention, the grafting agent is grafted selectively to the surface of the dispersed rubber particles, in contrast with the alternative possible reaction, which is with the monovinylidene aromatic monomer which is present. This is believed to increase the amount of polymer which is graft polymerized to the rubber particles, which in turn provides improvements in the properties of the composition. In the prior art in which myrcene is added at an earlier stage, such a mechanism is not possible, because myrcene added to the feed is consumed in a reaction with the dissolved rubber, and modifies the composition of the rubber, prior to the formation of the rubber particles, without enhancement of the graft polymer levels. This prior art technique does therefore not enhance the grafting onto the surface of the rubber, and results in little if any myrcene in the matrix of monovinylidene aromatic polymer.

Accordingly, in a further aspect of the invention, there is provided a rubber-reinforced polymer comprising a matrix of a monovinylidene aromatic monomer optionally having one or more other copolymerizable monomers copolymerized therein and (b) dispersed particles of rubber having the monovinylidene aromatic polymer graft polymerized to the outer surface thereof, wherein there is polymerized with the monovinylidene aromatic monomer a grafting agent of the formula:

$R^1R^2C = CR^5\text{-}CR^6 = CR^3R^4$

wherein $R^1$, $R^2$, $R^3$ and $R^4$ are each independently hydrogen or
$C_1$ to $C_{15}$ alkyl, and $R^5$ and $R^6$ are each independently hydrogen or a group of the formula:

$-(CR^7R^8)_n-CR^9=CR^{10}R^{11}$

wherein $R^7$ is H, Cl, Br or I,

$R^8$ is H, or a group of the formula $-CR^9=CR^{10}R^{11}$,

each $R^9$ independently is hydrogen or methyl,

each $R^{10}$ and each $R^{11}$ independently is $C_1$ to $C_4$ alkyl,

and n is 1 or 2,

provided that $R^5$ and $R^6$ are not both hydrogen, characterized in that the grafting agent is polymerized with monovinylidene aromatic polymer of the matrix and the monovinylidene aromatic polymer that is grafted to its outer surface of the rubber particles.

The amount of grafting agent in the rubber-reinforced polymer product may be somewhat higher than in the polymerization mixture, because solvent may be removed after the polymerization is complete, and may be in the range of from 0.1 to 6 percent, preferably from 0.1 to 5 percent of the composition. The grafting agent is preferably added in an amount of from 0.1 to 5 percent, preferably from 0.5 to 4 percent, more preferably from 2 to 3 percent, of the total (reaction) mixture, although the exact amount will depend on the particular reaction conditions.

Due to the excellent balance of gloss and toughness properties, the compositions of the present invention are useful in a wide variety of applications such as the injection molding of refrigerator liners, household appliances, toys and furniture. The rubber-reinforced polymers are also useful in extrusion applications such as in the preparation of a gloss layer using co-extrusion techniques.

The rubber-reinforced polymers of the present invention are derived from one or more monovinylidene aromatic compounds. Representative monovinylidene aromatic compounds include styrene, alkyl substituted styrenes such as alpha-alkyl-styrene (e.g., alpha-methyl-styrene and alpha-ethyl-styrene) and ring substituted styrenes (e.g., t-butyl styrene, vinyltoluene, including the ortho, meta and para isomers separately or in mixtures, particularly, p-vinyltoluene, o-ethyl-styrene and 2,4-dimethyl-styrene); ring substituted halo-styrenes such as chloro-styrene, 2,4-dichloro-styrene and the like; styrene substituted with both a halo and alkyl group such as 2-chloro-4-methylstyrene; vinyl anthracene; and mixtures thereof. In general, the polymer matrix is preferably derived from styrene or styrene in combination with alpha-methyl-styrene, with styrene being the most preferred monovinylidene aromatic compound.

The monomer mixture may also comprise one or more additional comonomers, preferably in an amount of up to 30 percent by weight of the polymerizable monomer mixture preferably up to 25 percent by weight. Suitable comonomers are ethylenically unsaturated nitriles such as acrylonitrile, alkyl acrylates and alkyl alkyl acrylates such as alkyl methacrylates, for example methyl methacrylate, methyl ethacrylate, n-butylacrylate or n-butylmethacrylate, ethylenically unsaturated acids such as acrylic, methacrylic and maleic acid and their other derivatives such as imides and anhydrides. Monomers other than the nitrile monomers are preferably employed in amounts less than 20 percent by weight, more preferably less than 10 percent by weight.

The rubber employed in preparing the rubber modified polymer of the present invention is generally a homopolymer or copolymer of an alkadiene or a copolymer of ethylene, propylene and, optionally, a non-conjugated diene. Advantageously the rubber is a homopolymer of a 1,3-conjugated diene such as butadiene, isoprene, piperylene, chloroprene and the like or a block or tapered block copolymer of such conjugated dienes with a monovinylidene aromatic compound such as styrene, an alpha,beta-ethylenically unsaturated nitrile such as acrylonitrile, an alpha-olefin such as ethylene or propylene, or the like.

When a bimodal particle size distribution is utilized, the rubber utilized to produce the larger size rubber particles is preferably a linear polybutadiene. It is generally difficult to produce smaller size particles utilizing such linear polybutadiene, and therefore the rubber utilized to produce the smaller size particles is preferably a polybutadiene/polystyrene block or tapered block copolymer.

Although the rubber may contain a small amount of a crosslinking agent, excessive crosslinking can result in loss of the rubbery characteristics and/or render the rubber insoluble in the monomer.

The rubbery polymers preferably employed in the preparation of both the smaller and larger size, disperse rubber particles exhibit a second order transition temperature not higher than $0°C$ preferably not higher than $-20°C$ more preferably not higher than $-40°C$ as determined by conventional methods, e.g., ASTM Test Method D-746-52T.

Preferred rubber polymers are homopolymers of 1,3-butadiene and block or random copolymers of at least 30, more preferably from 50 to 85, weight percent, 1,3-butadiene and up to 70, more preferably from 15 to 50, weight percent, of a monovinylidene aromatic compound, preferably styrene.

The rubber is advantageously employed in amounts such that the rubber-reinforced polymer product contains from 2 to 20 percent, preferably from 3 to 17 percent, more preferably 3 to 15 weight rubber, with from 5 to 10 weight percent rubber, being most preferred (expressed as rubber or rubber equivalent).

The term "rubber or rubber equivalent" as used herein is intended to mean, for a rubber homopolymer (such as polybutadiene), simply the amount of rubber, and for a block copolymer, the amount of the rubber-forming component of the copolymer (e.g. for a butadiene-styrene block copolymer, the amount of the butadiene component of the block copolymer).

In the rubber-reinforced polymer of the present invention, the rubber is preferably dispersed throughout the polymer matrix as discrete particles having a bimodal size distribution preferably with 50 to 90 weight percent, more preferably at least 60 weight percent of the dispersed rubber having a volume average diameter from 0.01 to 2.0 micrometer, preferably from 0.10 to 0.45 micrometer, more preferably from 0.2 micrometer to 0.4 micrometer and from 5 to 50 weight percent of the dispersed rubber having a volume average diameter from 0.5 to 10 micrometer, preferably from 1 to 6 micrometers, more preferably from 1 to 5 micrometer, the weight percentage of rubber being expressed as weight percent rubber or rubber equivalent.

The said particle size is generally the diameter of the particles, including all occlusions generally present in the disperse rubber particles of a rubber-reinforced polymer prepared using mass polymerization techniques, and may be measured using conventional techniques such as (for larger particles) using a Coulter Counter (Coulter Counter is a Trade Mark) or, particularly for smaller particles, transmission electron microscopy, using the counting technique, proposed by Schwartz (H.A. Schwartz, Metals and Alloys, June 1934, p134).

A plasticizer or lubricant may preferably be employed in concentration of up to 15, preferably from 1 to 8, more preferably from 1 to 7, weight percent based on the total weight of the rubber-reinforced polymer.

The polymerization may preferably be conducted in one or more substantially linear stratified flow or so-called plug-flow type reactors, for example as described in U.S. Patent 2,727,884, which may or may not be arranged to provide for the recirculation of a portion of the partially polymerized product.

In the determination of the point during the process where phase inversions occurs, standard techniques can be used. For example, samples removed from the process can be analyzed microscopically to determine whether the rubber-containing phase is dispersed. Such samples can also be analyzed compositionally to determine whether sufficient monomer conversion has taken place to result in a larger polymer phase volume than rubber-containing phase volume. It is also possible, when monitoring the solution viscosity to note the viscosity decrease that occurs in the viscosity profile of the polymerizing reaction mixture over the reaction time.

In the preferred method in accordance with the invention, separate rubber-containing prepolymer compositions are prepared, utilizing plug-flow mass-polymerization techniques, and having the desired average particle sizes. The two prepolymer compositions are then blended together in a ratio such as to provide the desired fraction of the smaller and larger particles in the final product, and polymerization of the matrix prepolymers is continued, so as to produce the final polymer matrix. In this method, polymerization of the two separate components is carried out at least until the point of phase inversion has been reached, after which point the size of the rubber particles formed does not change appreciably.

The grafting agent is preferably added to the prepolymer composition containing the larger particles, before the prepolymer compositions are blended.

The techniques of mass-polymerization, and the conditions needed for producing a desired average particle size are well known to one skilled in the art, and will not be described in detail.

A suitable initiator may suitably be employed in the preparation of the rubber-reinforced polymer. Representative of such initiators include the peroxide initiators such as the peresters, e.g., tertiary butyl peroxybenzoate and tertiary butyl peroxyacetate, dibenzoyl peroxide, dilauroyl peroxide, 1,1-bis tertiary butyl peroxycyclohexane, 1-3-bis tertiary butyl peroxy-3,3,5-trimethyl cyclohexane, di-cumyl peroxide; photo chemical initiation techniques and the like. Preferred high graft initiators include dibenzoyl peroxide, tertiary butyl peroxy benzoate, 1,1-bis tertiary butyl peroxy cyclohexane and tertiary butyl peroxy acetate.

Initiators may be employed in a range of concentrations, dependent on a variety of factors including the specific initiator employed, the desired levels of polymer grafting and the conditions at which the mass polymerization is conducted. Specifically, in the preferred mass polymerization process for preparing rubber-reinforced polymers from 50 to 2000, preferably from 100 to 1500, weight parts of the initiator are employed per million weight parts of polymerization mixture.

In addition to the monomer, rubber and initiator, the mass polymerization mixture preferably contains the aforementioned plasticizer or lubricant and optionally, but advantageously, reaction diluent. Reaction diluents advantageously employed include normally liquid organic materials which form a solution with the polymerizable monomers and the polymer prepared therefrom. Representatives of such organic liquid diluents include aromatic and substituted aromatic hydrocarbons such as benzene, ethylbenzene, toluene, xylene or the like; saturated or inertly substituted, saturated aliphatics having either straight or branched chain of 5 or more carbon atoms, such as heptane, hexane, octane or the like; alicyclic or inertly substituted alicyclic hydrocarbons having 5 or 6 carbon atoms such as cyclohexane and the like. Preferred of such organic liquid diluents employed herein are the substituted aromatics; with ethylbenzene and xylene being most preferred. If employed, the reaction diluent is generally employed in an amount up to 20 weight percent preferably from 2 to 20 weight percent based on the total weight of rubber, monomer and diluent.

The feed stream advantageously contains up to 15, preferably from 1 to 8, more preferably from 1 to 7, weight percent of the plasticizer or lubricant based on the total weight of monomer and rubber.

The polymerization mixture used in the preparation of both the smaller and larger particles may also contain other materials such as an antioxidant (e.g., alkylated phenols such as di-tert-butyl-p-cresol or phosphites such as trisnonyl phenyl phosphite); a polymerization aid, e.g., chain transfer agent, such as an alkyl mercaptan such as n-dodecyl mercaptan or a mold release agent, e.g., zinc stearate. The use of a chain transfer agent is optional. If employed, the chain transfer agent is generally employed in an amount of from 0.001 to 0.5 weight percent based on the total weight of the polymerization mixture to which it is added. It may be added to the polymerization mixture before or after phase inversion. The mold release agent, if employed, is generally preferably added after phase inversion.

The temperatures at which polymerization is most advantageously conducted are dependent on the specific components, particularly initiator employed, but will generally vary from $60^\circ$ C to $190^\circ$ C.

In one method for preparing a rubber-reinforced polymer product with a bimodal particle size distribution, the polymerization of the first and second compositions is completed, and subjected to conditions to crosslink the rubber and remove any unreacted monomer. Subsequently, the resulting first and second polymer products are mechanically blended under conditions to form the rubber-reinforced polymer product having rubber particles of a bimodal size distribution dispersed therethrough.

In another method first and second compositions are polymerized past the point of phase inversion, but not to completion, to produce prepolymer compositions, and the two prepolymer compositions are then mixed. Polymerization of the resulting mixture is subsequently completed and the mixture then subjected to conditions to crosslink the rubber and remove residual monomer.

Crosslinking of the rubber in the polymerized monomer and removal of the unreacted monomers, as well as any reaction diluent, if employed, and other volatile materials is advantageously conducted employing conventional devolatilization techniques, at elevated temperatures, and/or under vacuum and removing them from the chamber.

The following examples are set forth to illustrate the present invention and should not be construed to limit its scope. In the examples, all parts and percentages are by weight unless otherwise indicated.

In the following Examples, the following general technique was employed in the production of the rubber-reinforced polymers. First the rubber is dissolved in the styrene monomer and ethyl benzene and then the indicated additives are mixed in. This mixture is fed into a first reactor which is heated to a required temperature.

The polymer feed is polymerized under the desired polymerization conditions and constant agitation. During the polymerization the reaction temperature increases along a temperature profile to maintain a constant conversion rate through the reactors. Appropriate agitation is provided as determined by the particle size required and by reaction mixture viscosity. The polymerization mixture is then polymerized to a solids level of up to 80 percent solids. Usually the first reactor polymerizes the mixture to 30 percent solids and the second reactor polymerizes the mixture to 60 percent solids.

The polymerization mixture coming out of the last reactor is then devolatilized and also at the same time the rubber is cross-linked to a certain level to maintain the integrity of the rubber particles under shearing conditions during extrusion and processing. The extruded material is then cut into granules and all subsequent testing is done using those granules.

The physical testing of the granules are carried out according to the following test procedures.

Melt flow rates are measured on a Davonport 3/80 apparatus at $200^\circ$ C under 5 kg load according to the ASTM method D-1238.

Rubber particles sizes were determined by using a Coulter Counter (Trade Mark).

Notched Izod impact values were determined according to the ASTM Test Method D-256 by using a 1 joule hammer on compression molded samples.

Tensile Yield Stress, Tensile Rupture Stress and Ultimate Elongation values were determined by using compression molded test bars on an Instron 1122 apparatus according to ASTM Test Method D-638.

The gloss measurements were done as follows.

Plaques of 10 cm*10 cm were injection molded on a Klockner™ injection molding machine under different injection molding conditions. Then the 60 degree Gardner Gloss of these materials were determined by using a gloss meter DR LANGE™ type. The 60 degree Gardner Gloss was determined under four different injection molding conditions representing best to worse molding conditions.

Conditions 1 to 4 represent the injection molding parameters used to determine the gloss points 1, 2, 3, and 4 respectively.

Condition 1

Holding pressure of 15 bar, injection pressure of 50 bar, real injection time of 0.4 seconds, real mass temperature of 250° C, real mold temperature of 50° C. The injection molding machine has the following temperatures. Nozzle 250° C, front zone 240° C, middle zone 210° C, and rear zone is 190° C.

Condition 2

All the conditions are the same as in condition 1 with the exception of the real injection time which is 1.0 seconds.

Condition 3

All the conditions are the same as in condition 1 with the following exceptions. Real mass temperature is 210° C, real mold temperature is 30° C and the injection molding machine has the following temperature profile. Nozzle temperature 210° C, front zone temperature of 200° C, middle zone temperature of 200° C and rear zone temperature of 180° C. Injection time is 0.4 seconds.

Condition 4

Same molding conditions as in Condition 3 with the following exception. For the molding conditions corresponding to the gloss point 4 in the real injection time is 1.0 seconds.

In all the above molding conditions the mold weight was kept to a constant value of 22 g.

Comparative Example 1

A polymerization mixture of the following composition was prepared by dissolving the rubber in styrene and ethyl benzene.

| styrene | 84.5 percent (w/w) |
| ethyl benzene | 8.0 percent |
| polybutadiene rubber | 6.8 percent |
| mineral oil plasticizer | 0.6 percent |
| tertiary butyl perbenzoate | 0.003 percent |

This polymerization mixture was fed through a three plug-flow stirred reactors at a rate of 1000 weight parts/hr and the polymerization mixture was polymerized by successively increasing the temperature of the mixture from 112° C to 175° C to obtain a uniform polymerization rate. All three reactors were agitated during the polymerization reaction. Chain transfer agent (n-dodecyl mercaptan) was added to the second reactor at a rate of 10 weight parts per hour as a 6 percent solution in ethyl benzene.

The polymerization mixture was polymerized to 80 percent solids and devolatilized under conditions as described.

The material obtained in Comparative Example 1 had the following properties.

7

| Property | Value | Units |
|---|---|---|
| Melt Flow Rate | 15.7 | g/10 minutes |
| Rubber Particle Size (volume average diameter) | 1.13 | micrometer |
| Notched Izod Impact | 39.5 | Joules/meter |
| Tensile Yield Stress | 22.3 | N/mmy2 |
| Tensile Rupture Stress | 15.7 | N/mmy2 |
| Ultimate Elongation | 7.0 | % |
| 60° degree Gardner Gloss | | |
| Condition 1 | 90.0 | % |
| Condition 2 | 72.0 | % |
| Condition 3 | 21.0 | % |
| Condition 4 | 17.0 | % |

Comparative Example 2

Comparative Example 2 was carried out under the same polymerization conditions as Comparative Example 1 with the exception that the feed of N-dodecyl mercaptan solution was cut down from 10 weight parts/hr to 5 weight parts/hr. This run was done to obtain a material with a lower Melt Flow Rate than in Comparative Example 1 in order to eliminate the effects of Melt Flow Rate on the gloss values.

| Property | Value | Units |
|---|---|---|
| Melt Flow Rate | 3.1 | same units as in comparative Example 1 |
| Rubber Particle Size | 1.28 | |
| Notched Izod Impact | 58.5 | |
| Tensile Yield Stress | 26.2 | |
| Tensile Rupture Stress | 19.2 | |
| Ultimate Elongation | 11.1 | |
| 60° Gardner Gloss | | |
| Condition 1 | 90.0 | |
| Condition 2 | 74.0 | |
| Condition 3 | 18.0 | |
| Condition 4 | 15.0 | |

Example 1

Example 1 was carried out under the same polymerization conditions as in Comparative Example 1 with the following modifications.

A myrcene feed having a composition of myrcene 25 percent(w/w) and ethyl benzene 75 percent(w/w) was added to the transfer line between reactors 1 and 2 at a feed rate of 30 weight parts/hr. It was determined that phase inversion of the reaction mixtures had occurred in reactor 1.

The N-dodecyl mercaptan addition was made at the same place as in Comparative Example 1 at a rate of 27 weight parts/hr.

The polymerization temperature increased from 112° C to 169° C.

8

The amount of myrcene in the total polymerization mixture was 1 percent(w/w).

The rest of the polymerization conditions were as indicated in Comparative Example 1.

The polymeric material obtained had the following properties as measured in the above explained manner.

| Property | Value | Units |
| --- | --- | --- |
| Melt Flow Rate | 6.0 | as in above Examples |
| Rubber Particle Size | 1.20 | |
| Notched Izod Impact | 60.5 | |
| Tensile Yield Stress | 25.9 | |
| Property | Value | Units |
| Tensile Rupture Stress | 17.0 | as in above Examples |
| Ultimate Elongation | 10.0 | |
| 60° Gardner Gloss | | |
| Condition 1 | 91.0 | |
| Condition 2 | 78.0 | |
| Condition 3 | 33,0 | |
| Condition 4 | 28.0 | |

## Example 2

The polymerization conditions were the same as in Example 1 with the exception that the myrcene feed rate was 60 weight parts/hr (approximately 2 percent w/w of the total feed), and no N-dodecyl mercaptan was used.

The polymeric material obtained had the following properties.

| Property | Value |
| --- | --- |
| Melt Flow Rate | 6.2 |
| Rubber Particle Size | 1.16 |
| Notched Izod Impact | 71.4 |
| Tensile Yield Stress | 26.4 |
| Tensile Rupture Stress | 16.0 |
| Ultimate Elongation | 8.0 |
| 60° Gardner Gloss | |
| Condition 1 | 91.0 |
| Condition 2 | 82.0 |
| Condition 3 | 45.0 |
| Condition 4 | 36.0 |

## Example 3

The same polymerization conditions as in Example 2 were used except that the myrcene feed rate was 90 weight parts/hr (corresponding to 3 percent w/w of the total polymerization mixture). The resulting polymeric material had the following properties.

| Properties | Value |
|---|---|
| Melt Flow Rate | 8.1 |
| Rubber Particle Size | 1.15 |
| Notched Izod Impact | 66.0 |
| Tensile Yield Stress | 25.3 |
| Tensile Rupture Stress | 17.8 |
| Ultimate Elongation | 5.0 |
| 60° Gardner Gloss | |
| Condition 1 | 93.0 |
| Condition 2 | 84.0 |
| Condition 3 | 56.0 |
| Condition 4 | 47.0 |

Comparative Example 3

The same polymerization conditions as in Example 3 were used except that the myrcene feed was added at a rate of 60 weight parts/hr (corresponding to a 2 percent w/w ratio of the total polymerization mixture) and was added to the feed line of the first reactor (i.e. at the commencement of the reaction, and thus prior to phase inversion). By comparison, in Examples 1, 2 and 3, myrcene addition was made in the transfer line between the first and second reactor which means that the myrcene addition was made after the phase inversion point. No N-dodecyl mercaptan addition was used. The rest of the polymerization conditions were as in Example 3. The following material properties were obtained.

| Property | Value |
|---|---|
| Melt Flow Rate | 6.3 |
| Rubber Particle Size | 2.05 |
| Notched Izod Impact | 77.0 |
| Tensile Yield Stress | 22.1 |
| 60° Gardner Gloss | |
| Condition 1 | 73.0 |
| Condition 2 | 54.0 |
| Condition 3 | 23.0 |
| Condition 4 | 13.0 |

**Claims**

1. A method for the production of a rubber-reinforced polymer which method comprises polymerizing a mixture comprising a monovinylidene aromatic monomer and optionally one or more other monomers copolymerizable therewith in a mass polymerization process, the said mixture also comprising a rubber dissolved in the said monomer or monomer mixture,
continuing the said polymerization at least until the occurrence of phase inversion,
thereafter adding to the polymerization mixture a grafting agent of the formula:
$R^1R^2C = CR^5 - CR^6 = CR^3R^4$
wherein $R^1$, $R^2$, $R^3$ and $R^4$ are each independently hydrogen or $C_1$ to $C_{15}$ alkyl, and
$R^5$ and $R^6$ are each independently hydrogen or a group of the formula:
$-(CR^7R^8)_n - CR^9 = CR^{10}R^{11}$
wherein $R^7$ is H, Cl, Br or I,

10

$R^8$ is H, or a group of the formula
$-CR^9 = CR^{10}R^{11}$,
each $R^9$ independently is hydrogen or methyl,
each $R^{10}$ and each $R^{11}$ independently is $C_1$ to $C_4$ alkyl,
and n is 1 or 2,
provided that $R^5$ and $R^6$ are not both hydrogen, and continuing the said polymerization in the presence of the said grafting agent to produce a rubber-reinforced polymer composition.

2. A method as claimed in Claim 1, wherein $R^{10}$ and $R^{11}$ are each methyl.

3. A method as claimed in Claim 1 or Claim 2, wherein $R^5$ is hydrogen.

4. A method as claimed in any one of the preceding claims, wherein $R^1$, $R^2$, $R^3$ and $R^4$ are each hydrogen.

5. A method as claimed in any one of the preceding claims, wherein the grafting agent is myrcene.

6. A method as claimed in any one of the preceding claims, wherein the resulting rubber-reinforced polymer composition has a bimodal rubber particle size distribution.

7. A method as claimed in any one of the preceding claims, wherein the grafting agent is employed in an amount of from 0.5 to 4 percent of the total composition.

8. A method as claimed in Claim 7, wherein the grafting agent is employed in an amount of from 2 to 3 percent of the composition.

9. A method as claimed in any one of the preceding claims, wherein the monovinylidene monomer is styrene, alpha methyl styrene, alpha ethyl styrene, chlorostyrene, vinyl toluene, vinyl anthracene, or a mixture of two or more thereof.

10. A method as claimed in any one of the preceding claims, wherein the rubber is a homopolymer of a 1,3-conjugated diene or a copolymer of such a conjugated diene with a monovinylidene aromatic compound.

11. An article produced by molding a composition prepared by a method as claimed in any one of the preceding claims.

12. A rubber-reinforced polymer comprising a matrix of a monovinylidene aromatic monomer optionally having one or more other copolymerizable monomers copolymerized therein and (b) dispersed particles of rubber having the monovinylidene aromatic polymer graft polymerized to the outer surface thereof, wherein there is polymerized with the monovinylidene aromatic monomer a grafting agent of the formula:
$R^1R^2C = CR^5\text{-}CR^6 = CR^3R^4$
wherein $R^1$, $R^2$, $R^3$ and $R^4$ are each independently hydrogen or $C_1$ to $C_{15}$ alkyl, and $R^5$ and $R^6$ are each independently hydrogen or a group of the formula:
$-(CR^7R^8)_n\text{-}CR^9 = CR^{10}R^{11}$
wherein $R^7$ is H, Cl, Br or I,
$R^8$ is H, or a group of the formula
$-CR^9 = CR^{10}R^{11}$,
each $R^9$ independently is hydrogen or methyl,
each $R^{10}$ and each $R^{11}$ independently is $C_1$ to $C_4$ alkyl,
and n is 1 or 2,
provided that $R^5$ and $R^6$ are not both hydrogen, characterized in that the grafting agent is polymerized with monovinylidene aromatic polymer of the matrix and the monovinylidene aromatic polymer that is grafted to its outer surface of the rubber particles.

13. A rubber-reinforced polymer according to Claim 12 wherein the grafting agent is polymerized in an amount of from 0.1 to 6 percent by weight based on rubber modified polymer composition weight.

14. A rubber-reinforced polymer according to Claim 12 or Claim 13 having a bimodal rubber particle size distribution and wherein the grafting agent is polymerized with the monvinylidene aromatic polymer of the matrix and that which is grafted to the outer surface of the group of larger particles.

11

European
Patent Office

EUROPEAN SEARCH
REPORT

Application Number

EP 90 31 0891

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 221 905 (TOKAS) <br> * Claims; examples 4-5 * <br> — — — | 1-5,7-13 | C 08 F 279/02 // <br> (C 08 F 279/02 <br> C 08 F 212:02 ) |
| D,A | US-A-4 346 199 (PENG et al.) <br> * Example 2-B; claims * <br> — — — — — | 1-5,7-13 | |

TECHNICAL FIELDS
SEARCHED (Int. Cl.5)

C 08 F

The present search report has been drawn up for all claims

| Place of search | Date of completion of search | Examiner |
|---|---|---|
| The Hague | 20 December 90 | LOISELET-TAISNE S.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document